# EUROPÄISCHE PATENTANMELDUNG

(11) **EP 4 834 657 A1**
(43) Veröffentlichungstag der Anmeldung: **04.11.2026**
(21) Anmeldenummer: 26175318.0
(22) Anmeldetag: 29.04.2026
(51) Int. Cl.: B60N 2/865

(54) **AUSSTATTUNGSTEIL FÜR EINEN FAHRZEUGSITZ, INSBESONDERE KOPFSTÜTZE FÜR EINEN FAHRZEUGSITZ**

(30) Priorität: 30.04.2025 DE 102025116778
(71) Anmelder: Adient US LLC, Plymouth, MI 48170 (US)
(72) Erfinder: Rezbárik, Miroslav, 91101 Trencin (SK); Ptasinský, Mikulás, 913 24 Velka Hradná (SK)
(74) Vertreter: Liedtke & Partner Patentanwälte

(57) **Zusammenfassung**

Die Erfindung betrifft ein Ausstattungsteil (100) für einen Fahrzeugsitz (10), das Ausstattungsteil (100) aufweisend eine Basis (120) und ein in einer Bewegungsrichtung (x1, x2) bewegbares Schlittenteil (140), wobei das Schlittenteil (140) in wenigstens zwei Relativpositionen zu der Basis (120) mittels einer Verriegelungsvorrichtung (160) verriegelbar ist, die Verriegelungsvorrichtung (160) aufweisend ein relativ zu der Basis (120) bewegbares Verriegelungselement (170) mit wenigstens einem Zahn (174), und wenigstens zwei an dem Schlittenteil (140) ausgebildete oder an dem Schlittenteil (140) befestigte Rastvertiefungen (144), wobei in einem verriegelten Zustand der Verriegelungsvorrichtung (160) der wenigstens eine Zahn (174) in eine der wenigstens zwei Rastvertiefungen (144) eingreift und in einem entriegelten Zustand der Verriegelungsvorrichtung (160) der wenigstens eine Zahn (174) außer Eingriff mit den Rastvertiefungen (144) ist, wobei das Verriegelungselement (170) zusätzlich zu dem wenigstens einem Zahn (174) wenigstens einen Verriegelungszapfen (176) aufweist, und die Basis (120) eine mit dem wenigstens einen Verriegelungszapfen (176) korrespondierende Aussparung (130) aufweist. Die Erfindung betrifft zudem eine Kopfstütze (102), ausgeführt als ein erfindungsgemäßes Ausstattungsteil (100), wobei die Basis (120) mittels einer Haltevorrichtung (104) an einer Rückenlehne (13) des Fahrzeugsitzes (10) fixierbar ist.

## Beschreibung

Die Erfindung betrifft ein Ausstattungsteil für einen Fahrzeugsitz, insbesondere eine Kopfstütze für den Fahrzeugsitz, das Ausstattungsteil aufweisend eine Basis und ein relativ zu der Basis in wenigstens einer Bewegungsrichtung bewegbares Schlittenteil, wobei das Schlittenteil in wenigstens zwei Relativpositionen zu der Basis mittels einer Verriegelungsvorrichtung in wenigstens eine Bewegungsrichtung verriegelbar ist, die Verriegelungsvorrichtung aufweisend ein relativ zu der Basis bewegbares Verriegelungselement mit wenigstens einem Zahn, und wenigstens zwei an dem Schlittenteil ausgebildete oder an dem Schlittenteil befestigte Rastvertiefungen, wobei in einem verriegelten Zustand der Verriegelungsvorrichtung der wenigstens eine Zahn in eine der wenigstens zwei Rastvertiefungen eingreift und in einem entriegelten Zustand der Verriegelungsvorrichtung der wenigstens eine Zahn außer Eingriff mit den Rastvertiefungen ist. Die Erfindung betrifft zudem eine Kopfstütze.

### Stand der Technik

Aus der WO 2019/238516 A1 ist eine höhenverstellbare Kopfstütze bekannt, aufweisend ein Grundtragelement und ein darin angeordnetes, in einer Längsrichtung verschieblich führbares Tragelement, wobei zur Ausbildung einer Führung das Grundtragelement eine Anzahl von Öffnungen umfasst und das Tragelement eine Anzahl von Führungsteilen umfasst, wobei eine Form der Anzahl von Öffnungen mit einer Form der Anzahl von Führungsteilen korrespondiert.

Die DE 10 2021 130 160 B4 offenbart ein Ausstattungsteil für ein Fahrzeug, mit einer Basis und einem zu der Basis bewegbarem Teil, wobei das bewegbare Teil in wenigstens zwei Relativpositionen zu der Basis mittels einer Verriegelungsvorrichtung bezüglich wenigstens einer Bewegungsrichtung verriegelbar ist, wobei die Verriegelungsvorrichtung wenigstens eine Aussparung umfasst, wobei in einer Riegelposition der Verriegelungsvorrichtung wenigstens ein Sicherheitsriegel in eine der Aussparungen eingreift und in einer Löseposition der Sicherheitsriegel außer Eingriff mit der Aussparung ist.

### Aufgabe

Der Erfindung liegt die Aufgabe zu Grunde, ein Ausstattungsteil für ein Fahrzeug der eingangs genannten Art zu verbessern, insbesondere eine Verriegelungsfestigkeit einer Verriegelungsvorrichtung des Ausstattungsteils zu erhöhen, sowie mittels eines solchen Ausstattungsteils eine festigkeitsoptimierte Kopfstütze bereitzustellen.

### Lösung

Diese Aufgabe wird erfindungsgemäß gelöst durch ein Ausstattungsteil für einen Fahrzeugsitz, insbesondere eine Kopfstütze für den Fahrzeugsitz, das Ausstattungsteil aufweisend eine Basis und ein relativ zu der Basis in wenigstens einer Bewegungsrichtung bewegbares Schlittenteil, wobei das Schlittenteil in wenigstens zwei Relativpositionen zu der Basis mittels einer Verriegelungsvorrichtung in wenigstens eine Bewegungsrichtung verriegelbar ist, die Verriegelungsvorrichtung aufweisend ein relativ zu der Basis bewegbares Verriegelungselement mit wenigstens einem Zahn, und wenigstens zwei an dem Schlittenteil ausgebildete oder an dem Schlittenteil befestigte Rastvertiefungen, wobei in einem verriegelten Zustand der Verriegelungsvorrichtung der wenigstens eine Zahn in eine der wenigstens zwei Rastvertiefungen eingreift und in einem entriegelten Zustand der Verriegelungsvorrichtung der wenigstens eine Zahn außer Eingriff mit den Rastvertiefungen ist, wobei das Verriegelungselement zusätzlich zu dem wenigstens einem Zahn wenigstens einen Verriegelungszapfen aufweist, und die Basis eine mit dem wenigstens einen Verriegelungszapfen korrespondierende Aussparung aufweist, wobei der wenigstens eine Verriegelungszapfen im verriegelten Zustand der Verriegelungsvorrichtung in der Aussparung angeordnet ist, und im entriegelten Zustand der Verriegelungsvorrichtung der wenigstens eine Verriegelungszapfen außerhalb der Aussparung angeordnet ist.

Unter einem Zahn ist jedes geeignete Element zu verstehen, das so gestaltet ist, dass es in eine entsprechende Rastvertiefung passt und so eine Bewegung in wenigstens eine Bewegungsrichtung formschlüssig blockiert und/oder verriegelt. Der wenigstens eine Zahn kann ein Zahn einer Geradverzahnung sein. Der wenigstens eine Zahn kann ein Zahn einer Evolventenverzahnung sein. Der wenigstens eine Zahn kann ein Bolzen sein. Der wenigstens eine Zahn kann symmetrisch sein. Der wenigstens eine Zahn kann unsymmetrisch sein. Unter einer Rastvertiefung ist vorliegend eine dreidimensionale Vertiefung zu verstehen, die geeignet ist, eine Bewegung des wenigstens einen Zahns in wenigstens eine Bewegungsrichtung formschlüssig zu blockieren und/oder zu verriegeln.

Unter einem Verriegelungszapfen ist jedes geeignete Element zu verstehen, das so gestaltet ist, dass es in eine entsprechende Aussparung passt und so eine Bewegung in wenigstens eine Bewegungsrichtung formschlüssig blockiert und/oder verriegelt. Der wenigstens eine Verriegelungszapfen kann ein Bolzen sein. Der wenigstens eine Verriegelungszapfen kann symmetrisch sein. Der wenigstens eine Verriegelungszapfen kann unsymmetrisch sein. Der wenigstens eine Verriegelungszapfen kann einen runden Querschnitt haben. Der wenigstens eine Verriegelungszapfen kann einen ovalen Querschnitt haben. Der wenigstens eine Verriegelungszapfen kann einen polygonalen Querschnitt haben. Unter einer Aussparung ist vorliegend eine dreidimensionale Vertiefung zu verstehen, die geeignet ist, eine Bewegung des wenigstens einen Verriegelungszapfens in wenigstens eine Bewegungsrichtung formschlüssig zu blockieren oder zu verriegeln. Die Aussparung kann eine Vertiefung sein. Die Aussparung kann eine Öffnung sein.

Das Ausstattungsteil kann beispielsweise eine Kopfstütze sein. Das Ausstattungsteil kann beispielsweise eine Sitztiefeneinstellung sein. Das Ausstattungsteil kann beispielsweise eine Wadenstütze sein.

Dadurch, dass das Verriegelungselement zusätzlich zu dem wenigstens einem Zahn wenigstens einen Verriegelungszapfen aufweist, und die Basis eine mit dem wenigstens einen Verriegelungszapfen korrespondierende Aussparung aufweist, wobei der wenigstens eine Verriegelungszapfen im verriegelten Zustand der Verriegelungsvorrichtung in der Aussparung angeordnet ist, und im entriegelten Zustand der Verriegelungsvorrichtung der wenigstens eine Verriegelungszapfen außerhalb der Aussparung angeordnet ist, weist das Verriegelungselement eine zusätzliche formschlüssige Abstützung in der Basis auf. Die von dem Verriegelungselement aufzunehmende Kraft erzeugt dadurch insbesondere geringere Biegespannungen in dem Verriegelungselement. Dadurch lässt sich alternativ die Verriegelungsfestigkeit der Verriegelungsvorrichtung erhöhen und/oder die Abmessungen des Verriegelungselements (und somit Kosten und Gewicht) reduzieren.

Eine Weiterbildung sieht vor, dass der wenigstens eine Verriegelungszapfen parallel zu dem wenigstens einen Zahn und an diesen angrenzend angeordnet ist. Insbesondere sind der wenigstens eine Verriegelungszapfen und der wenigstens eine Zahn einstückig, insbesondere als ein einstückiges Verriegelungselement, ausgebildet. Hierdurch ist das Verriegelungselement mit zweifacher Verriegelung - eine an der Basis und eine an dem Schlitten - einfach, bauraumsparend montageoptimiert ausgebildet.

Beispielsweise kann die Basis mindestens eine Führungsöffnung aufweisen, in der das Schlittenteil beweglich führbar oder geführt ist. Beispielsweise kann die Führungsöffnung u-förmig ausgebildet sein. Alternativ können mehrere, insbesondere zwei, Führungsöffnungen vorgesehen sein, die parallel zueinander und voneinander beabstandet in der Basis ausgebildet sind.

Zusätzlich kann die Basis eine Linearführung aufweisen, in welcher das Verriegelungselement beweglich führbar oder geführt ist. Vorzugsweise sind die mindestens eine Führungsöffnung und die Linearführung senkrecht zueinander angeordnet sind. Mit anderen Worten: Die mindestens eine Führungsöffnung erstreckt sich in Längsrichtung, insbesondere in Bewegungsrichtung, und die Linearführung erstreckt sich senkrecht dazu in Vertikalrichtung, insbesondere in Verriegelungsrichtung oder Entriegelungsrichtung.

Darüber hinaus kann die Linearführung mittig in der mindestens einen Führungsöffnung, insbesondere in einer u-förmigen Führungsöffnung, oder zwischen zwei Führungsöffnungen angeordnet sein. Dies ermöglicht einen besonders kompakten Aufbau des Ausstattungsteils.

Das Verriegelungselement kann in einer Linearführung der Basis in einer Verriegelungsrichtung und in einer der Verriegelungsrichtung entgegengesetzten Entriegelungsrichtung längsverschiebbar geführt sein. Durch ein Verschieben des Verriegelungselements in die Verriegelungsrichtung kann die Verriegelungsvorrichtung in den verriegelten Zustand überführbar sein. Durch ein Verschieben des Verriegelungselements in die Entriegelungsrichtung kann die Verriegelungsvorrichtung in den entriegelten Zustand überführbar sein.

Das Verriegelungselement kann einen in der Linearführung der Basis längsverschiebbar geführten Grundkörper aufweisen. Das Schlittenteil kann ein Durchgangsloch aufweisen. Das Verriegelungselement kann zumindest im verriegelten Zustand der Verriegelungsvorrichtung durch das Durchgangsloch des Schlittenteils derart hindurchragen, dass der Grundkörper auf einer ersten Seite des Durchgangslochs angeordnet ist und der wenigstens eine Verriegelungszapfen wenigstens teilweise auf einer gegenüberliegenden zweiten Seite des Durchgangslochs angeordnet ist. Das Durchgangsloch kann ein Langloch sein. Das Langloch kann parallel zu der Bewegungsrichtung ausgerichtet sein. Indem das Durchgangsloch ein Langloch ist, kann der Verriegelungszapfen in unterschiedlichen Relativpositionen zwischen dem Schlittenteil und der Basis durch das Durchgangsloch hindurchragen.

Das Verriegelungselement kann mehrere Zähne aufweisen. Jedem der Zähne kann genau eine von mehreren Reihen von Rastvertiefungen zugeordnet sein. Das Verriegelungselement kann genau zwei Zähne aufweisen, wobei jedem der beiden Zähne genau eine Reihe von Rastvertiefungen zugeordnet ist. Der wenigstens eine Verriegelungszapfen kann mittig zwischen mehreren Zähnen angeordnet sein. Der wenigstens eine Verriegelungszapfen kann mittig zwischen genau zwei Zähnen angeordnet sein. Je nach Relativposition zwischen dem Schlittenteil und der Basis fallen die Zähne in unterschiedliche Rastvertiefungen der Reihen von Rastvertiefungen ein, gegebenenfalls erst nachdem das Schlittenteil geringfügig zur Basis verschoben ist, damit die Zähne tief in die Rastvertiefungen einfallen können.

Der wenigstens eine Verriegelungszapfen kann durch ein als ein Langloch ausgeführtes Durchgangsloch hindurchragen. Beidseitig des Durchgangslochs kann jeweils mindestens eine von mehreren Reihen von Rastvertiefungen angeordnet sein. Der wenigstens eine Verriegelungszapfen kann, insbesondere in einer Verriegelungsrichtung, über den wenigstens einen Zahn hinausragen. Insbesondere ragt ein Zapfende des mindestens einen Verriegelungszapfens über ein Zahnende des wenigstens einen Zahnes hinaus.

Zwischen der Basis und dem relativ zu der Basis in wenigstens einer Bewegungsrichtung bewegbaren Schlittenteil kann eine Führung, insbesondere eine Linearführung, vorgesehen sein. Zur Ausbildung der Führung kann die Basis wenigstens eine Führungsöffnung und das Schlittenteil wenigstens ein Führungsteil aufweisen, wobei das wenigstens eine Führungsteil in der wenigstens einen Führungsöffnung verschiebbar geführt ist. Die Basis kann zwei Führungsöffnungen aufweisen, die jeweils ein Führungsteil des Schlittenteils aufnehmen und führen. Die beiden Führungsöffnungen können miteinander verbunden sein, insbesondere durch einen Steg.

Die Aufgabe wird erfindungsgemäß zudem gelöst durch eine Kopfstütze für einen Fahrzeugsitz, ausgeführt als ein erfindungsgemäßes Ausstattungsteil, wobei die Basis mittels einer Haltevorrichtung an einer Rückenlehne des Fahrzeugsitzes fixierbar ist. Mittels der Haltevorrichtung kann die Basis fest an der Rückenlehne des Fahrzeugsitzes fixierbar sein. Mittels der Haltevorrichtung kann die Basis höheneinstellbar an der Rückenlehne des Fahrzeugsitzes fixierbar sein.

Die Haltevorrichtung kann wenigstens eine Kopfstützenstange aufweisen. Die wenigstens eine Kopfstützenstange kann aus einem Rundmaterial gefertigt sein. Die wenigstens eine Kopfstützenstange kann aus einem Draht gefertigt sein. Der Draht kann einen runden Querschnitt haben. Der Draht kann einen ovalen Querschnitt haben. Der Draht kann einen polygonalen Querschnitt haben. Die Haltevorrichtung kann zwei Kopfstützenstangen aufweisen. Die Haltevorrichtung kann einen Haltebügel aufweisen. Der Haltebügel kann U-förmig sein. Der Haltebügel kann aus einem Rundmaterial gefertigt sein. Der Haltebügel kann aus einem Draht gefertigt sein. Der Draht kann einen runden Querschnitt haben. Der Draht kann einen ovalen Querschnitt haben. Der Draht kann einen polygonalen Querschnitt haben.

Das Schlittenteil der Kopfstütze kann mit einem Kopfanlageteil verbunden sein. Das Kopfanlageteil kann einen Kopf eines Insassen des Fahrzeugsitzes nach hinten abstützen. Das Kopfanlageteil kann mit dem Schlittenteil fest verbunden sein. Das Kopfanlageteil kann mit dem Schlittenteil verclipst sein. Das Kopfanlageteil kann mit dem Schlittenteil verschraubt sein. Das Kopfanlageteil und das Schlittenteil können einteilig gefertigt sein. Das Kopfanlageteil kann mit dem Schlittenteil mittels einer Kinematik verbunden sein. Mittels der Kinematik kann eine Neigung des Kopfanlageteils einstellbar sein.

Das Verriegelungselement kann mittels einer Arretierungsfeder in eine Verriegelungsrichtung vorgespannt sein, so dass der verriegelte Zustand der Verriegelungsvorrichtung durch die Arretierungsfeder gesichert ist. Durch ein, insbesondere manuell bedienbares, Entriegelungselement kann das Verriegelungselement, insbesondere eine Federkraft der Arretierungsfeder überwindend so lange in eine Entriegelungsrichtung bewegbar sein, bis der entriegelte Zustand der Verriegelungsvorrichtung erreicht ist.

Zusammenfassend und mit anderen Worten ausgedrückt ist durch die Erfindung eine verbesserte Verriegelung für einen beweglichen Mechanismus bereitgestellt. Gegenüber dem Stand der Technik, insbesondere gegenüber einer aus der WO 2019/238516 A1 bekannten Kopfstütze, ist ein Schlittenteil mit einer Basis in einem oberen Bereich ohne zusätzliche Komponenten oder ohne einen erweiterten Gleitweg eines Verriegelungselements zusätzlich verriegelbar. Das Verriegelungselement greift zusätzlich in einen oberen Bereich der Basis ein. Die Basis kann ein festes Bauteil sein. Das Schlittenteil kann ein bewegliches Bauteil sein, das in der Basis gleitet und durch das Verriegelungselement in definierter Position verriegelbar ist. Das Schlittenteil kann zusammen mit einer Frontplatte (Kopfanlageteil) konstruiert sein oder separat gefertigt und mit der Frontplatte und gegebenenfalls einer Rückabdeckung (Deckel) verbunden sein. Diese verbesserte Verriegelung wurde durch ein spezielles Design des als ein Mittelschloss ausgebildeten Verriegelungselements mit einem erweitertem Mittelbereich (Verriegelungszapfen) zum Zusammenwirken mit der Basis und einem Langloch in dem Schlittenteil erreicht. Das Langloch im Schlittenteil ermöglicht eine direkte Verbindung zwischen einer Linearführung für das Schlittenteil in der Basis und einer Öffnung in einem oberen Bereich der Basis für den Verriegelungszapfen durch das Verriegelungselement. Diese Verbindung bietet eine hochfeste Verriegelung des Schlittenteils in der Basis für hohe Belastungen. Zur Erzielung einer besseren Lastverteilung kann das Verriegelungselement auf einer linken Seite und auf einer rechten Seite des Verriegelungszapfens jeweils wenigstens einen Zahn aufweisen.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: schematisch eine Seitenansicht eines Fahrzeugsitzes, aufweisend ein als eine Kopfstütze ausgeführtes erfindungsgemäßes Ausstattungsteil,
- Fig. 2:: eine Explosionsdarstellung eines als eine Kopfstütze ausgeführten erfindungsgemäßen Ausstattungsteils,
- Fig. 3:: eine perspektivische Ansicht eines Verriegelungselements der Kopfstütze aus Figur 2,
- Fig. 4:: eine Unteransicht eines Schlittenteils der Kopfstütze aus Figur 2,
- Fig. 5:: eine perspektivische Ansicht des Schlittenteils aus Figur 4 und des Verriegelungselements aus Figur 3, wobei sich das Verriegelungselement in einer das Schlittenteil verriegelnden Position befindet,
- Fig. 6:: eine weitere perspektivische Ansicht des Schlittenteils aus Fig. 4 und des Verriegelungselements aus Figur 3, wobei sich das Verriegelungselement in einer das Schlittenteil verriegelnden Position befindet,
- Fig. 7:: einen Längsschnitt durch das Schlittenteil aus Figur 4 und das Verriegelungselement aus Figur 3, wobei sich das Verriegelungselement in einer das Schlittenteil verriegelnden Position befindet,
- Fig. 8:: eine perspektivische Ansicht einer Basis der Kopfstütze aus Figur 2,
- Fig. 9:: eine perspektivische Ansicht der Basis aus Figur 8 und des Verriegelungselements aus Figur 3, wobei sich das Verriegelungselement in einer das Schlittenteil verriegelnden Position befindet,
- Fig. 10:: einen Längsschnitt durch die Basis aus Figur 8 und das Verriegelungselement aus Figur 3, wobei sich das Verriegelungselement in einer das Schlittenteil verriegelnden Position befindet,
- Fig. 11:: eine Vorderansicht der Kopfstütze aus Figur 2,
- Fig. 12A:: einen Schnitt durch die Kopfstütze entlang der Linie A-A in Figur 11, wobei sich eine Verriegelungsvorrichtung der Kopfstütze in einem verriegelten Zustand und ein Kopfanlageteil in einer hinteren Position befinden,
- Fig. 12B:: einen Schnitt durch die Kopfstütze entlang der Linie B-B in Figur 11, wobei sich die Verriegelungsvorrichtung in einem verriegelten Zustand und ein Kopfanlageteil in einer hinteren Position befinden,
- Fig. 13A:: einen Schnitt durch die Kopfstütze entlang der Linie A-A in Figur 11, wobei sich die Verriegelungsvorrichtung in einem entriegelten Zustand und ein Kopfanlageteil in einer hinteren Position befinden,
- Fig. 13B:: einen Schnitt durch die Kopfstütze entlang der Linie B-B in Figur 11, wobei sich die Verriegelungsvorrichtung in einem entriegelten Zustand und ein Kopfanlageteil in einer hinteren Position befinden,
- Fig. 14A:: einen Schnitt durch die Kopfstütze entlang der Linie A-A in Figur 11, wobei sich die Verriegelungsvorrichtung in einem entriegelten Zustand und ein Kopfanlageteil in einer vorderen Position befinden, und
- Fig. 14B:: einen Schnitt durch die Kopfstütze entlang der Linie B-B in Figur 11, wobei sich die Verriegelungsvorrichtung in einem entriegelten Zustand und ein Kopfanlageteil in einer vorderen Position befinden.

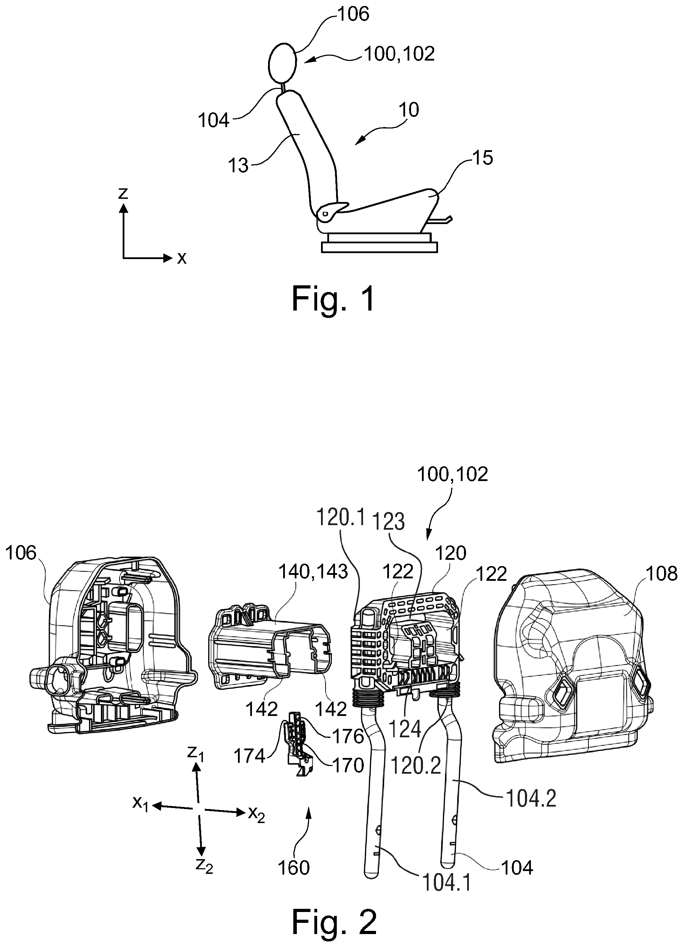

Figur 1 zeigt schematisch einen Fahrzeugsitz 10 mit einem als eine Kopfstütze 102 ausgeführten erfindungsgemäßen Ausstattungsteil 100. Der Fahrzeugsitz 10 umfasst eine Rückenlehne 13 und ein Sitzteil 15. An der Oberkante der Rückenlehne 13 ist die Kopfstütze 102 mittels einer Haltevorrichtung 104 angebracht.

Der Fahrzeugsitz 10 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 10 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 10 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 10 sitzenden Insassen in normaler Sitzposition, wobei der Fahrzeugsitz 10 im Fahrzeug eingebaut, in einer zur Personenbeförderung geeigneten Gebrauchsposition mit aufrecht stehender Rückenlehne 13 und wie üblich in Fahrtrichtung ausgerichtet ist.

Das in den Figuren 2 bis 14B dargestellte, als eine Kopfstütze 102 ausgeführte, erfindungsgemäße Ausstattungsteil 100 ist nachfolgend näher beschrieben. Die Erfindung ist jedoch nicht auf dieses Ausführungsbeispiel beschränkt.

Wie beispielsweise in der Explosionsdarstellung von Figur 2 erkennbar, weist die Kopfstütze 102 eine Basis 120, ein Schlittenteil 140, eine Verriegelungsvorrichtung 160 mit einem Verriegelungselement 170, ein Kopfanlageteil 106 und einen Deckel 108 auf.

Die Basis 120 ist mittels der als zwei Kopfstützenstangen 104.1, 104.2 ausgebildeten Haltevorrichtung 104 an der Rückenlehne 13 befestigbar. Anstelle von Kopfstützenstangen 104.1, 104.2 kann auch ein Kopfstützenbügel vorgesehen sein. Zur Aufnahme und Befestigung der Kopfstützenstangen 104.1, 104.2 umfasst die Basis 120 an jeder Außenseite Halteöffnungen 120.1, 120.2.

Das Schlittenteil 140 ist relativ zu der Basis 120 in eine erste Bewegungsrichtung x₁ und in eine zweite, der ersten Bewegungsrichtung x₁ entgegengesetzte, Bewegungsrichtung x₂ längsverschiebbar geführt. Zur Ausbildung der Führung weist die Basis 120 mindestens eine Führungsöffnung 122, bevorzugt zwei Führungsöffnungen 122, und das Schlittenteil 140 zwei korrespondierende Führungsteile 142 auf. Die beiden Führungsteile 142 sind in der mindestens einen, insbesondere u-förmigen Führungsöffnung (nicht dargestellt) oder in den beiden Führungsöffnungen 122 (dargestellt) beweglich, insbesondere verschiebbar, geführt. Die mehreren, insbesondere zwei, Führungsöffnungen 122 sind vorzugsweise parallel zueinander und voneinander beabstandet in der Basis 120 ausgebildet. Darüber hinaus können diese durch eine als Schlitz 123 ausgebildete Durchgangsöffnung verbunden sein.

Die erste Bewegungsrichtung x₁ und die zweite Bewegungsrichtung x₂ fluchten miteinander und unterscheiden sich ausschließlich durch um 180 Grad entgegengesetzte Orientierungen. Die erste Bewegungsrichtung x₁ ist annähernd nach vorne orientiert. Die zweite Bewegungsrichtung x₂ ist annähernd nach hinten orientiert. Die Längsrichtung x und die erste Bewegungsrichtung x₁ können parallel zueinander sein oder in einem spitzen Winkel zueinander verlaufen.

Das Kopfanlageteil 106 ist an dem Schlittenteil 140 befestigt, vorliegend verclipst und/oder verschraubt. Das Kopfanlageteil 106 dient einer Abstützung eines Kopfes eines Insassen des Fahrzeugsitzes 10 nach hinten. Das Kopfanlageteil 106 kann mit einer Polsterung bezogen sein. Der Deckel 108 verblendet die Kopfstütze 102 von hinten. Der Deckel 108 ist an dem Kopfanlageteil 106 befestigt, vorliegend verclipst und/oder verschraubt.

Das Schlittenteil 140 ist mittels der Verriegelungsvorrichtung 160 in mehreren, zur Basis 120 unterschiedlichen Relativpositionen, verriegelbar. Dadurch lässt sich ein Abstand zwischen dem Kopfanlageteil 106 und dem Kopf des Insassen einstellen.

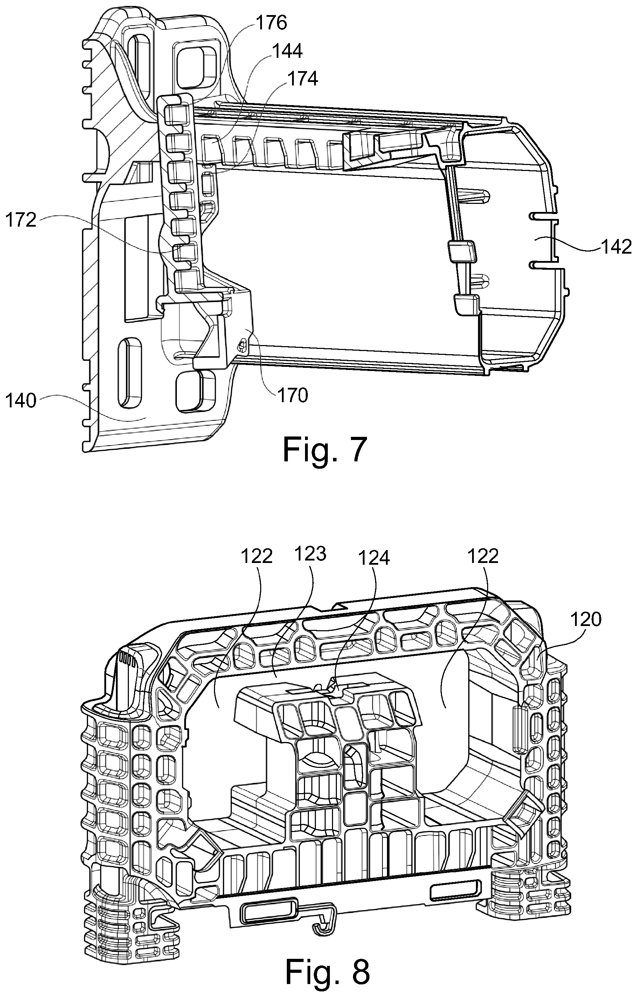

Die Verriegelungsvorrichtung 160 weist ein relativ zu der Basis 120 bewegbares Verriegelungselement 170 auf. Das Verriegelungselement 170 ist in einer Linearführung 124 (gezeigt in Figur 8) der Basis 120 in einer Verriegelungsrichtung z₁ und in einer der Verriegelungsrichtung z₁ entgegengesetzten Entriegelungsrichtung z₂ längsverschiebbar geführt. Die Verriegelungsrichtung z₁ und die Entriegelungsrichtung z₂ fluchten miteinander und unterscheiden sich ausschließlich durch um 180 Grad entgegengesetzte Orientierungen. Die Verriegelungsrichtung z₁ ist annähernd nach oben orientiert. Die Entriegelungsrichtung z₂ ist annähernd nach unten orientiert. Die Vertikalrichtung z und die Verriegelungsrichtung z₁ können parallel zueinander sein oder in einem spitzen Winkel zueinander verlaufen.

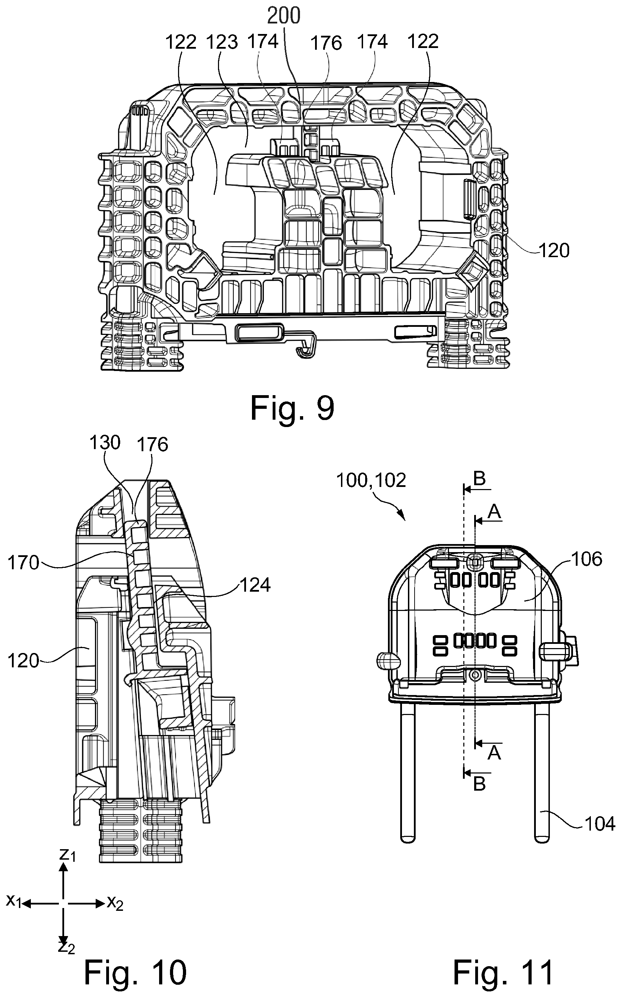

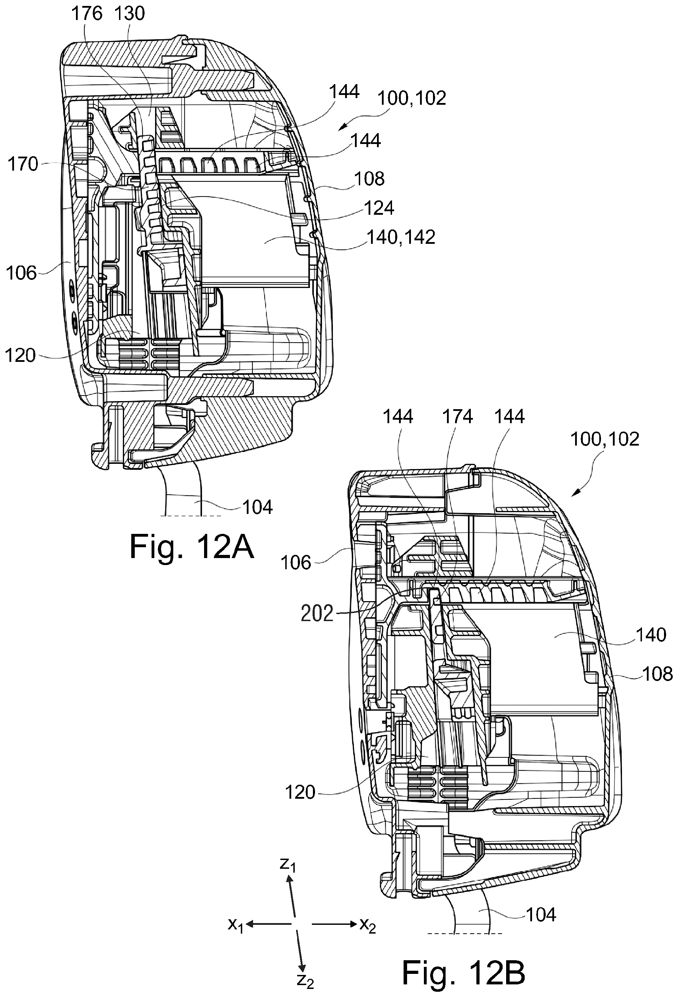

Der wenigstens eine Verriegelungszapfen 176 kann beispielsweise parallel zu dem wenigstens einen Zahn 174 und an diesen angrenzend angeordnet sein. Insbesondere sind der wenigstens eine Verriegelungszapfen 176 und der wenigstens eine Zahn 174 einstückig, insbesondere als ein einstückiges Verriegelungselement 170, ausgebildet. Hierdurch ist das Verriegelungselement 170 mit zweifacher Verriegelung, insbesondere eine erste Verriegelung 200 mittels des Verriegelungszapfens 176 an der Basis 120 (dargestellt in Figur 9) und eine zweite Verriegelung 202 mittels des Zahns 174 an dem Schlittenteil 140 (dargestellt in Figur 12B), einfach, bauraumsparend montageoptimiert ausgebildet.

Zusätzlich weist die Basis 120 eine Linearführung 124 (auch in Figur 8 dargestellt) auf, in welcher das Verriegelungselement 170 beweglich führbar oder geführt ist. Vorzugsweise sind die mindestens eine Führungsöffnung 122 und die Linearführung 124 senkrecht zueinander angeordnet sind. Mit anderen Worten: Die mindestens eine Führungsöffnung 122 erstreckt sich in Längsrichtung x, insbesondere in Bewegungsrichtung x₁, x₂, und die Linearführung 124 erstreckt sich senkrecht dazu in Vertikalrichtung z, insbesondere in Verriegelungsrichtung z₁ oder Entriegelungsrichtung z₂.

Dabei kann die Linearführung 124 mittig in der mindestens einen Führungsöffnung 122, insbesondere in einer u-förmigen Führungsöffnung, (nicht dargestellt) oder zwischen den zwei Führungsöffnungen 122 angeordnet sein.

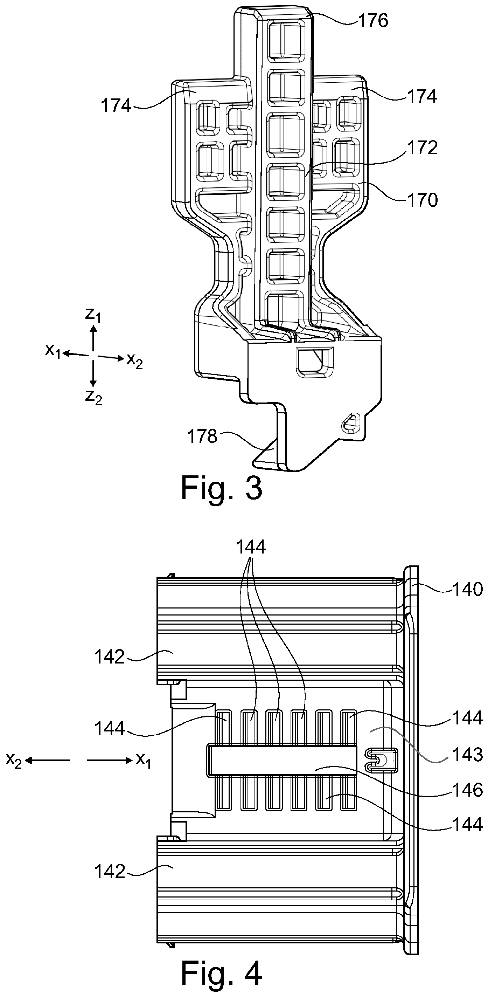

Wie in Figur 3 gezeigt, weist das Verriegelungselement 170 einen Grundkörper 172 auf, der in der Linearführung 124 der Basis 120 geführt ist. Das Verriegelungselement 170 weist zudem zwei Zähne 174 und einen Verriegelungszapfen 176 auf. Die beiden Zähne 174 und der Verriegelungszapfen 176 stehen von dem Grundkörper 172 ab. Der Verriegelungszapfen 176 ist mittig zwischen den beiden Zähnen 174 angeordnet. Der Verriegelungszapfen 176 steht, insbesondere nach oben, über die beiden Zähne 174 über. Das Verriegelungselement 170 weist an seiner Unterseite eine Rampe 178 auf. Die Rampe 178 verläuft schräg zur Entriegelungsrichtung z₂.

Wie in Figur 4 gezeigt weist die Verriegelungsvorrichtung 160 zudem zwei Reihen von Rastvertiefungen 144 zum Zusammenwirken mit den Zähnen 174 des Verriegelungselements 170 und eine Aussparung 130 (gezeigt in Figur 10) zum Zusammenwirken mit dem Verriegelungszapfen 176 auf. Die Rastvertiefungen 144 sind in dem Schlittenteil 140 ausgebildet, vorzugsweise in einem die beiden Führungsteile 142 miteinander verbindenden Steg 143 des Schlittenteils 140. Der Steg 143 ist in einem Schlitz 123 (gezeigt in Figur 8) angeordnet, der die beiden Führungsöffnungen 122 miteinander verbindet. Die Aussparung 130 ist in der Basis 120 ausgebildet.

Das Schlittenteil 140 weist ein als ein Langloch ausgeführtes Durchgangsloch 146 auf. Das Durchgangsloch 146 ist vorliegend in dem Steg 143 angeordnet. Der Verriegelungszapfen 176 ragt im verriegelten Zustand der Verriegelungsvorrichtung 160 durch das Durchgangsloch 146 des Schlittenteils 140 hindurch, wobei der Grundkörper 172 unterhalb des Durchgangslochs 146 angeordnet ist und der wenigstens eine Verriegelungszapfen 176 wenigstens teilweise oberhalb des Durchgangslochs 146 angeordnet ist.

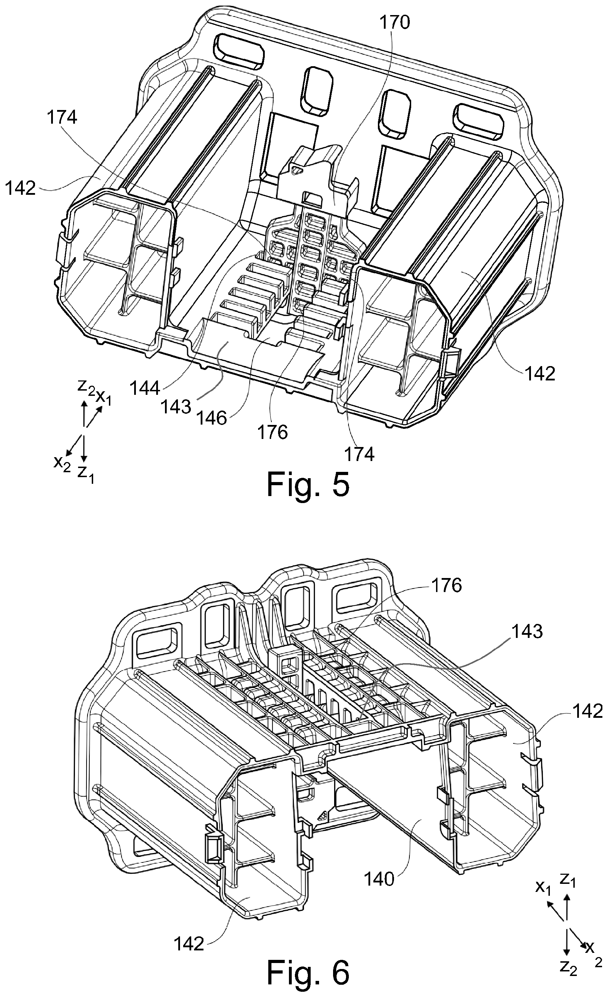

Die Figuren 5 bis 7 zeigen die Verriegelungsvorrichtung 160 im verriegelten Zustand, wobei die beiden Zähne 174 jeweils in eine der Rastvertiefungen 144 und der Verriegelungszapfen 176 in die Aussparung 130 der Basis 120 eingreifen. Das Verriegelungselement 170 ist dadurch, insbesondere in der zweiten Bewegungsrichtung x₂, unterhalb des Durchgangslochs 146 formschlüssig in der Linearführung 124 und oberhalb des Durchgangslochs 146 formschlüssig in der Aussparung 130 aufgenommen. Der verriegelte Zustand der Verriegelungsvorrichtung 160 ist in den Figuren 12A und 12B dargestellt, wobei das Kopfanlageteil 106 in den Figuren 12A und 12B in einer hinteren Position gezeigt ist. Die Schnittverläufe der Schnittdarstellungen in den Figuren 12A und 12B sind in Figur 11 dargestellt. Das Verriegelungselement 170 befindet sich in Figur 12A im verriegelten Zustand und bildet die zweite Verriegelung 202 mit dem Schlittenteil 140.

Zum Entriegeln der Verriegelungsvorrichtung 160 weist das Verriegelungselement 170 die Rampe 178 auf. Ein in den Figuren nicht dargestelltes, aber aus der WO 2019/238516 A1 bekanntes Entriegelungselement, das vorzugsweise in der Basis 120 gelagert ist, dient zur Bewegung des Verriegelungselements 170 in die Entriegelungsrichtung z_{2.}

Figur 8 zeigt die Basis 120 mit der Linearführung 124 zur Führung des Verriegelungselements 170. Die beiden Führungsöffnungen 122 sind miteinander durch den Schlitz 123 verbunden. Die Führungsöffnungen 122 sind zur Aufnahme der Führungsteile 142 des Schlittenteils 140 ausgebildet.

Figur 9 zeigt in einer perspektivischen Ansicht und Figur 10 zeigt in einer Schnittansicht die Basis 120 mit dem Verriegelungselement 170 ohne das Schlittenteil 140. Das Verriegelungselement 170 befindet sich im verriegelten Zustand und bildet die erste Verriegelung 200 mit der Basis 120. Dabei ragt der Verriegelungszapfen 176 des Verriegelungselements 170 in die Aussparung 130 der Basis 120.

An dem Entriegelungselement kann ein Betätigungsknopf angeordnet sein, um das Entriegelungselement in einer Betätigungsrichtung, vorzugsweise einer Querrichtung, relativ zur Basis 120 zu bewegen. Die Rampe 178 verläuft schräg zur Betätigungsrichtung. Eine Rückstellfeder kann beispielsweise zum Zurückstellen des Betätigungsknopfes und/oder des Entriegelungselements entgegen der Betätigungsrichtung vorgesehen sein.

Wenn das Entriegelungselement aus einer Ausgangsstellung heraus in Betätigungsrichtung bewegt wird, kommt eine Kontur des Entriegelungselements zunächst in Kontakt mit der Rampe 178, so dass die Rampe 178, und mit dieser das Verriegelungselement 170, im weiteren Verlauf durch diese Kontur in Entriegelungsrichtung z₂ nach unten verschiebbar ist. Dadurch kommen die Zähne 174 außer Eingriff mit den Rastvertiefungen 144 und der Verriegelungszapfen 176 außer Eingriff mit der Aussparung 130. Durch das Verschieben des Verriegelungselements 170 in die Entriegelungsrichtung z₂ ist somit die Verriegelungsvorrichtung 160 in den entriegelten Zustand überführbar.

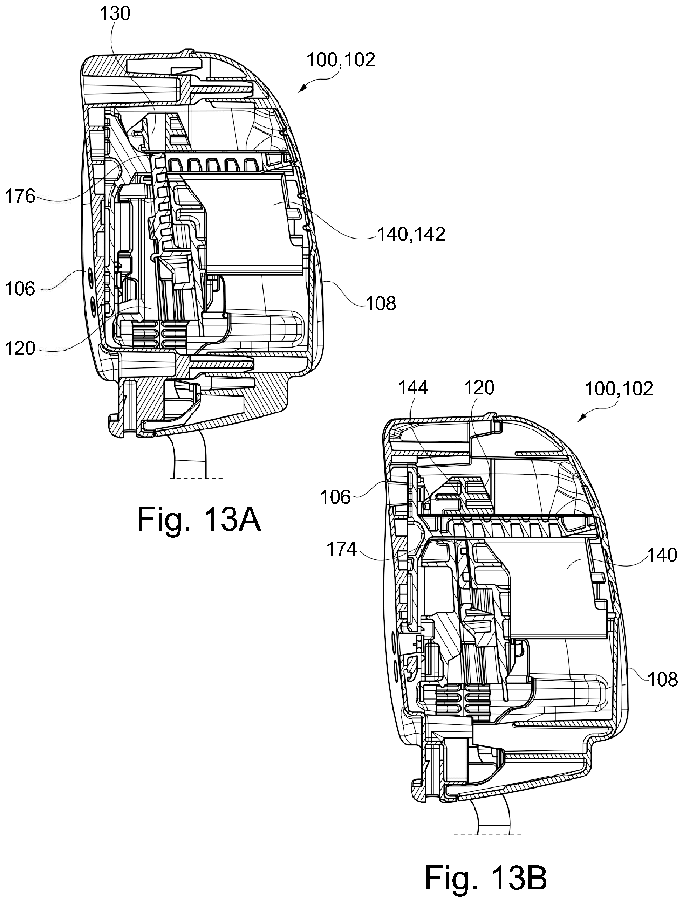

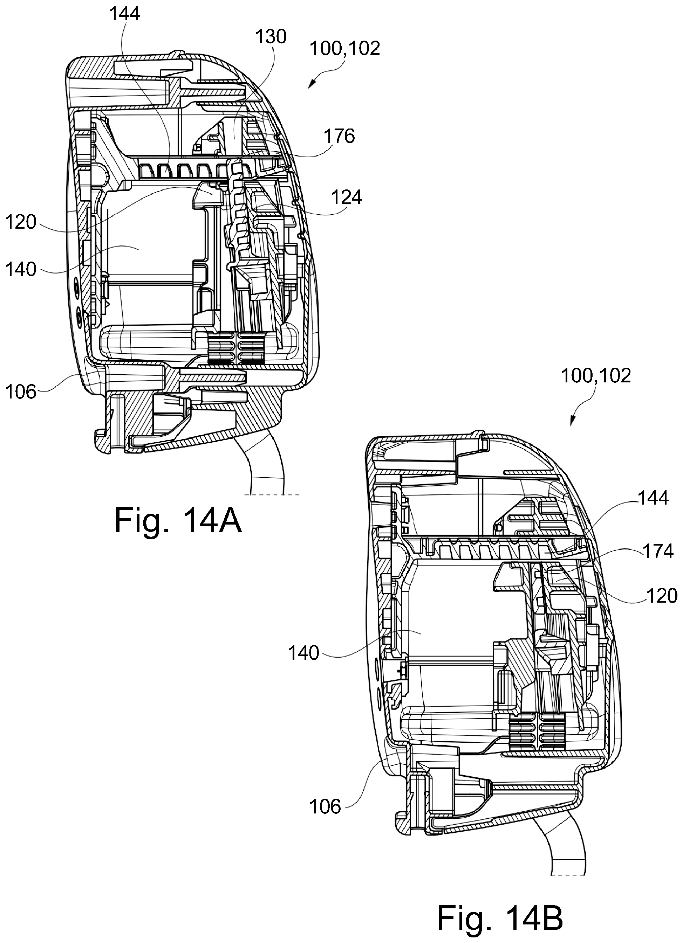

Im entriegelten Zustand der Verriegelungsvorrichtung 160 ist das Schlittenteil 140 der Kopfstütze 102 relativ zu der Basis 120 in die erste Bewegungsrichtung x₁ und/oder die zweite Bewegungsrichtung x₂ verschiebbar. Der entriegelte Zustand der Verriegelungsvorrichtung 160 ist in den Figuren 13A, 13B, 14A und 14B dargestellt, wobei das Kopfanlageteil 106 in den Figuren 13A und 13B in einer hinteren Position und in den Figuren 14A und 14B in einer vorderen Position gezeigt ist. Die Schnittverläufe der Schnittdarstellungen in den Figuren 13A, 13B, 14A und 14B sind in Figur 11 dargestellt.

Wenn das Entriegelungselement nicht mehr betätigt wird, bewegt die Rückstellfeder dieses entgegen der Betätigungsrichtung zurück in die Ausgangsstellung. Die Rampe 178 des Verriegelungselements 170 wird nicht mehr vom Entriegelungselement beaufschlagt, so dass eine Verriegelungsfeder das Verriegelungselement 170 in die Verriegelungsrichtung z₁ bewegt, wobei die Zähne 174 wieder in Eingriff mit den Rastvertiefungen 144 und der Verriegelungszapfen 176 wieder in Eingriff mit der Aussparung 130 gerät. Durch ein Verschieben des Verriegelungselements 170 in die Verriegelungsrichtung z₁ ist die Verriegelungsvorrichtung 160 wieder in den verriegelten Zustand überführbar.

Die Konturen der Zähne 174 und der Rastvertiefungen 144 können derart ausgelegt, insbesondere angeschrägt sein, dass das Schlittenteil 140 durch eine Kraftbeaufschlagung in die erste Bewegungsrichtung x₁ (nach vorne) auch ohne Betätigung des Entriegelungselements in die erste Bewegungsrichtung x₁ bewegt werden kann, indem die Zähne 174 unter der Kraftbeaufschlagung durch entsprechend ausgelegte Schrägen aus den Rastvertiefungen 144 herausgeschoben werden und durch die Kraft der Verriegelungsfeder in die darauffolgenden Rastvertiefungen 144 einfallen. In diesem Fall ist das Schlittenteil 140 mittels der Verriegelungsvorrichtung 160 in nur eine Bewegungsrichtung, nämlich in die zweite Bewegungsrichtung x₂ (nach hinten), verriegelbar.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

### Bezugszeichenliste

- 10: Fahrzeugsitz
- 13: Rückenlehne
- 15: Sitzteil
- 100: Ausstattungsteil
- 102: Kopfstütze
- 104: Haltevorrichtung
- 104.1, 104.2: Kopfstützenstange
- 106: Kopfanlageteil
- 108: Deckel
- 120: Basis
- 120.1, 120.2: Halteöffnung
- 122: Führungsöffnung
- 123: Schlitz
- 124: Linearführung
- 130: Aussparung (für Verriegelungszapfen 176)
- 140: Schlittenteil
- 142: Führungsteil
- 143: Steg
- 144: Rastvertiefung
- 146: Durchgangsloch (Langloch)
- 160: Verriegelungsvorrichtung
- 170: Verriegelungselement
- 172: Grundkörper
- 174: Zahn
- 176: Verriegelungszapfen
- 178: Rampe
- 200: erste Verriegelung
- 202: zweite Verriegelung
- x: Längsrichtung
- x₁: erste Bewegungsrichtung
- x₂: zweite Bewegungsrichtung
- z: Vertikalrichtung
- z₁: Verriegelungsrichtung
- z₂: Entriegelungsrichtung

## Patentansprüche

1. Ausstattungsteil (100) für einen Fahrzeugsitz (10), wobei das Ausstattungsteil (100) eine Basis (120) und ein relativ zu der Basis (120) in wenigstens eine Bewegungsrichtung (x₁, x₂) bewegbares Schlittenteil (140) aufweist,
wobei das Schlittenteil (140) in wenigstens zwei Relativpositionen zu der Basis (120) mittels einer Verriegelungsvorrichtung (160) in wenigstens eine Bewegungsrichtung (x₁, x₂) verriegelbar ist, die Verriegelungsvorrichtung (160) aufweisend ein relativ zu der Basis (120) bewegbares Verriegelungselement (170) mit wenigstens einem Zahn (174), und wenigstens zwei an dem Schlittenteil (140) ausgebildete oder an dem Schlittenteil (140) befestigte Rastvertiefungen (144), wobei in einem verriegelten Zustand der Verriegelungsvorrichtung (160) der wenigstens eine Zahn (174) in eine der wenigstens zwei Rastvertiefungen (144) eingreift und in einem entriegelten Zustand der Verriegelungsvorrichtung (160) der wenigstens eine Zahn (174) außer Eingriff mit den Rastvertiefungen (144) ist,
**dadurch gekennzeichnet, dass**
das Verriegelungselement (170) zusätzlich zu dem wenigstens einem Zahn (174) wenigstens einen Verriegelungszapfen (176) aufweist, und die Basis (120) eine mit dem wenigstens einen Verriegelungszapfen (176) korrespondierende Aussparung (130) aufweist, wobei der wenigstens eine Verriegelungszapfen (176) im verriegelten Zustand der Verriegelungsvorrichtung (160) in der Aussparung (130) angeordnet ist, und im entriegelten Zustand der Verriegelungsvorrichtung (160) der wenigstens eine Verriegelungszapfen (176) außerhalb der Aussparung (130) angeordnet ist.

2. Ausstattungsteil (100) nach Anspruch 1, **dadurch gekennzeichnet, dass** der wenigstens eine Verriegelungszapfen (176) parallel zu dem wenigstens einen Zahn (174) und an diesen angrenzend angeordnet ist.

3. Ausstattungsteil (100) nach Anspruch 1 oder 2, **dadurch gekennzeichnet, dass** die Basis (120) mindestens eine Führungsöffnung (122) aufweist, in der das Schlittenteil (140) beweglich führbar oder geführt ist.

4. Ausstattungsteil (100) nach einem der vorhergehenden Ansprüche, **dadurch gekennzeichnet, dass** die Basis (120) eine Linearführung (124) aufweist, in welcher das Verriegelungselement (170) beweglich führbar oder geführt ist.

5. Ausstattungsteil (100) nach Anspruch 4, **dadurch gekennzeichnet, dass** die Führungsöffnung (122) und die Linearführung (124) senkrecht zueinander angeordnet sind.

6. Ausstattungsteil (100) nach Anspruch 4 oder 5, **dadurch gekennzeichnet, dass** die Linearführung (124) mittig in der mindestens einen Führungsöffnung (122) oder zwischen zwei Führungsöffnungen (122) angeordnet ist.

7. Ausstattungsteil (100) nach einem der Ansprüche 4 bis 6, **dadurch gekennzeichnet, dass** das Verriegelungselement (170) in der Linearführung (124) der Basis (120) in einer Verriegelungsrichtung (z₁) und in einer der Verriegelungsrichtung (z₁) entgegengesetzten Entriegelungsrichtung (z₂) längsverschiebbar geführt ist, wobei durch ein Verschieben des Verriegelungselements (170) in die Verriegelungsrichtung (z₁) die Verriegelungsvorrichtung (160) in den verriegelten Zustand überführbar ist, und durch ein Verschieben des Verriegelungselements (170) in die Entriegelungsrichtung (z₂) die Verriegelungsvorrichtung (160) in den entriegelten Zustand überführbar ist.

8. Ausstattungsteil (100) nach einem der Ansprüche 4 bis 7, **dadurch gekennzeichnet, dass** das Verriegelungselement (170) einen in der Linearführung (124) der Basis (120) längsverschiebbar geführten Grundkörper (172) aufweist, das Schlittenteil (140) ein Durchgangsloch (146) aufweist, und das Verriegelungselement (170) zumindest im verriegelten Zustand der Verriegelungsvorrichtung (160) durch das Durchgangsloch (146) des Schlittenteils (140) derart hindurchragt, dass der Grundkörper (172) auf einer Seite des Durchgangslochs (146) angeordnet ist und der wenigstens eine Verriegelungszapfen (176) wenigstens teilweise auf einer gegenüberliegenden Seite des Durchgangslochs (146) angeordnet ist.

9. Ausstattungsteil (100) nach einem der vorhergehenden Ansprüche, **dadurch gekennzeichnet, dass** das Verriegelungselement (170) mehrere Zähne (174) aufweist.

10. Ausstattungsteil (100) nach Anspruch 9, **dadurch gekennzeichnet, dass** jedem der Zähne (174) genau eine Reihe von mehreren Reihen von Rastvertiefungen (144) zugeordnet ist.

11. Ausstattungsteil (100) nach einem der vorhergehenden Ansprüche, **dadurch gekennzeichnet, dass** der wenigstens eine Verriegelungszapfen (176) durch ein Durchgangsloch (146) hindurchragt, wobei beidseitig des Durchgangslochs (146) jeweils mindestens eine von mehreren Reihen von Rastvertiefungen (144) angeordnet ist.

12. Ausstattungsteil (100) nach einem der vorhergehenden Ansprüche, **dadurch gekennzeichnet, dass** der wenigstens eine Verriegelungszapfen (176) mittig zwischen mehreren Zähnen (174) angeordnet ist.

13. Ausstattungsteil (100) nach einem der vorhergehenden Ansprüche, **dadurch gekennzeichnet, dass** der wenigstens eine Verriegelungszapfen (176) über den wenigstens einen Zahn (174) hinausragt.

14. Kopfstütze (102), ausgeführt als ein Ausstattungsteil (100) nach einem der Ansprüche 1 bis 13, **dadurch gekennzeichnet, dass** die Basis (120) mittels einer Haltevorrichtung (104), insbesondere aufweisend zwei Kopfstützenstangen, an einer Rückenlehne (13) des Fahrzeugsitzes (10) fixierbar ist.

15. Kopfstütze (102) nach Anspruch 14, **dadurch gekennzeichnet, dass** das Schlittenteil (140) mit einem Kopfanlageteil (106) verbunden ist.
